# EUROPEAN PATENT APPLICATION

(11) **EP 2 805 865 A1**
(43) Date of publication of application: **26.11.2014**
(21) Application number: 13398007.8
(22) Date of filing: 21.05.2013
(51) Int. Cl.: B61D 33/00, B60N 2/68, B60N 2/24, B60N 2/015

(54) **Seat and seating system**

(71) Applicant: Monte Meao Componentes Auto S.A., 3721-908 Vila de Cucujaes (PT)
(72) Inventor: Rodrigues Lello, José Luis, 3721-908 Cucujaes (PT); de Magalhaes Cerqueira, Fernando Antonio, 3721-908 Cucujaes (PT)
(74) Representative: Beck & Rössig European Patent Attorneys

(57) **Abstract**

A seat (10) comprises a front shell (11) and a back shell (12) in stacked arrangement, the front shell (11) having a seating portion (15) and a backrest (16) integrally moulded of synthetic resin, the back shell (12) having a seating support portion (19) and a backrest support portion (20) integrally moulded of synthetic resin, wherein the seating support portion (20) forms at its side facing away from the front shell (11) at least one connection interface (24) for mounting on a crossbeam (2) passing underneath the seating support portion (20) in a direction parallel to the backrest support portion (19), each connection interface (24) having at least two protrusions (25, 26) spaced apart from each other across the crossbeam (2) and configured to laterally embrace the crossbeam (2) to thereby position the seat (10) on the crossbeam (2) in transversal direction of said crossbeam (2). This enables a flexible seating system with high stability, which is simple in construction and production and can be adapted easily to various surroundings.

## Description

The present invention relates to seats and seating systems for use in public transport vehicles such as busses, ships, trams and underground railways.

With a view to large transport capacities the seats have to have to be compact in size.

Because of intense use they must be robust while of course high design flexibility is required to meet customer's needs.

Such seats may be formed as a shell having a seating portion as well as a backrest integrally moulded of synthetic resin. The seat is secured via fasteners to a support structure provided on the vehicle.

The interior design and thus the surroundings in which the seats have to be mounted may vary strongly in public transport vehicles. Often each seat or pair of seats requires an individual support structure. Accordingly, there is need for a highly flexible interface between the seat and the vehicle body.

It is therefore the object of the present invention to provide a flexible seating system with high stability, which is simple in construction and production and can be adapted easily to various surroundings.

This technical problem is solved by a seat according to claim 1. Accordingly, the present invention provides a seat comprising an front shell and a back shell in stacked arrangement, the front shell having a seating portion and a backrest integrally moulded of synthetic resin, the lower shall having a seating support portion and a backrest support portion integrally moulded of synthetic resin, wherein the seating support portion forms at its side facing away from the front shell at least one connection interface for mounting on a crossbeam passing underneath the seating support portion in a direction parallel to the backrest, each connection interface having at least two protrusions spaced apart from each other across the crossbeam and configured to laterally embrace the crossbeam to thereby position the seat on the crossbeam in transversal direction of said crossbeam.

The inventive seat is easy in construction and thus can be manufactured at low costs. In particular, it is possible to produce each of the upper and back shell in a single piece by injection moulding.

Further, the seat can be mounted easily on a unified type of crossbeam and is securely held thereon. The protrusions lend high stability to the connection interface which is thus well suited for use in public transport vehicles.

Advantageous embodiments are indicated in further claims.

Preferably, at least one reinforcement member is sandwiched between the front shell and the back shell, and one or more a fasteners for fixing the seat on the crossbeam are anchored in each reinforcement member and extend through the back shell towards the crossbeam. This may increase the stability of the interface between the seat and corresponding support structure, i.e. the crossbeam.

Further, the front shell may cover the reinforcement members and the fasteners so that they are not visible from the top side of the seat. A smooth and uninterrupted surface not only provides an aesthetic appearance but also reduces the risk of vandalism attacks.

According to a further embodiment, the back shell is formed at its side facing towards the front shell with ribs extending from the backrest support portion to the seating support portion and protruding towards the front shell. This may further increase the stability of the seat while maintaining a low weight, which is of particular relevance in respect of low fuel consumption and high vehicle payload.

According to a yet another embodiment each connection interface may comprises an elongate support surface between the protrusions for resting on the crossbeam. This may further enhance the stability of the seat and seat interface.

Preferably, the elongate support surface is defined at the rear side of a depression formed in the seating support portion, the depression receiving a reinforcement member and the rear side of the depression extending downwards and beyond a bottom wall of the back shell. This structural integration keeps the overall structure of the back shell very simple.

According to a yet another embodiment the back shell is fixed on the front shell from the bottom side of the front shell while the front shell exposes a smooth and interruption free surface in any connection areas between the back shell and the front shell. As already mentioned above, a smooth and uninterrupted top side is advantageous in respect of aesthetic appearance and vandalism protection.

Further, the parting line between the front shell and the back shell may extend along the outer rim of the front shell around the front shell. Accordingly, the front shell is fully supported by the back shell, i.e. the bottom side of the front shell is fully covered and protected.

The afore-mentioned seats are preferably implemented in a seating system comprising a crossbeam and one or more seats, wherein each seat laterally embraces the crossbeam and is fixed thereto by fasteners. This system can be adapted easily to the individual surroundings of seat positions in public transport vehicles. The number of seats in a row on a crossbeam can be varied as required while the structure of each seat remains the same irrespective of the required support structure.

Preferably, the crossbeam has a constant cross-sectional area along its length. Accordingly, the support structure can be easily made from e.g. extruded profiles and the like by simply cutting off the required length.

According to a further embodiment the crossbeam may be provided at its side facing away from the seat with first grooves extending in lengthwise direction of the crossbeam for receiving the fasteners. It is thus possible to hide the fasteners from the passenger's eyes and to protect the fasteners, thereby preventing passengers from abusive ideas.

According to a yet another embodiment the crossbeam may be provided at its side facing away from the seat with second grooves extending in lengthwise direction of the crossbeam for securing the crossbeam to a support structure, said second grooves each having an undercut. Accordingly, the crossbeam can be secured to a support structure from its bottom side while this connection is hardly visible to a passenger's eye. It is also possible to preassemble one or more seats on a crossbeam and subsequently mount this unit in the vehicle. Similarly, the whole unit can be removed without disassembling the seats first. Practically, by this, the assembly of the seat and crossbeam on the one hand and of the crossbeam and support structure on the other hand are independent of each other.

According to a further embodiment an armrest and/or a hand rail may be fixed to the crossbeam at its side facing away from the seat. Preferably, the armrest and/or hand rail may be fixed to the crossbeam via the second grooves in which case separate interfaces for fixing an armrest or hand rail will be obsolete.

As stated above, the afore-described seat and seating system are preferably implemented in public transport vehicles though use in other surroundings may be contemplated.

The invention may be carried into practice in the various ways and one embodiment will now be described by way of example with reference to the accompanying drawings, in which:
- Fig. 1: shows a seating system comprising four passenger seats in a row mounted on a ship;
- Fig. 2: shows the interface between a seat and a crossbeam;
- Fig. 3: shows the top side of the front shell of the seat;
- Fig. 4: shows the bottom side of the front shell of the seat;
- Fig. 5: shows the top side of the back shell of the seat;
- Fig. 6: shows the bottom side of the back shell of the seat;
- Fig. 7: shows the crossbeam;
- Fig. 8: shows the bottom side of the crossbeam with a seat mounted thereon;
- Fig. 9: shows an example for a support structure supporting the cross beam; and
- Fig. 10: shows the interface between the crossbeam and the support structure.

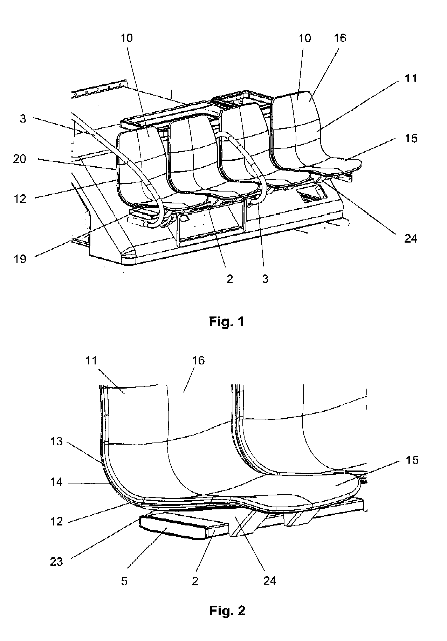

Fig. 1 shows a seating system 1 arranged in the interior of a ship. The seating system comprises four individual seats 10 arranged in a row on a crossbeam 2 while the number of seats 10 may be lower or higher than shown. Each seat 10 is individually mounted on the crossbeam 2 while neighbouring seats 10 are spaced apart from each other by a gap, respectively. Due to the structure of the crossbeam 2 and interface between the seats 10 and crossbeam 2, which will be explained in detail herein below, the width of this gap can be designed individually according to customers needs. Armrests or hand rails 3 may as well be mounted on the crossbeam 2 though the position and shape may vary from that shown in fig. 1. Preferably, such armrests or hand rails 3 are a connected to a bottom side 4 of the crossbeam 2. It is also possible to totally dispense with armrests and handrails 3 in which case there will only be the seats 10 that are mounted on the crossbeam 2.

The seats 10 each comprise a front shell 11 and a back shell 12 in stacked arrangement. The parting line 13 between the front shell 11 and the back shell 12 extends along the outer rim 14 of the front shell 11 around the front shell 11.

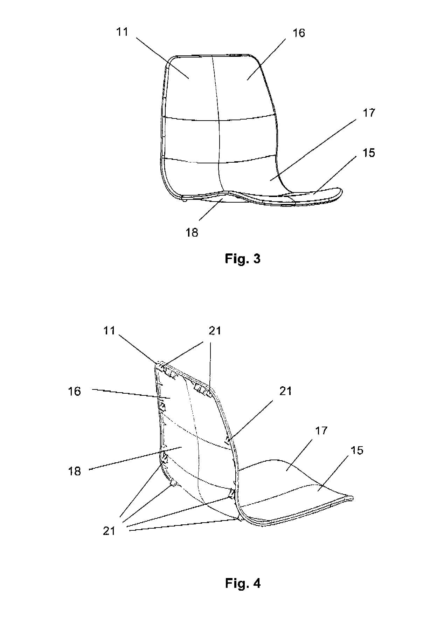

As shown in figs. 3 and 4, the front shell 11 has a seating portion 15 and a backrest 16 integrally moulded of synthetic resin. Preferably, the front shell 11 is made in a single piece by injection moulding.

The top side 17 of the front shell 11 may be contoured to better support a passenger's body. Preferably, the top side 17 has a smooth and interruption free surface. Further, though not shown, a cushion may be provided at the seating portion 15 and/or the backrest 16.

The back shell 12 has a shape substantially corresponding to the shape of the front shell 11 so that the bottom side 18 of that front shell 11 is fully covered by the back shell 12. Preferably, the back shell 12, too, is made in a single piece by injection moulding.

In particular, the back shell 12 comprises a seating support portion 19 and a backrest support portion 20 integrally moulded of synthetic resin. The seating support portion 19 is arranged underneath the seating portion 15 and the backrest support portion 20 is arranged behind the backrest 16.

The back shell 12 may provide the major part of structural stability of the seat while the front shell 11 may provide aesthetic appearance and seating comfort to the seat.

The back shell is fixed 12 on the front shell 11 from the bottom side 18 of the front shell 11 while the front shell 11 exposes a smooth and interruption free surface in any connection area between the back shell 12 and the front shell 11. In order to connect both shells the front shell 11 is provided at its bottom side 18 with swellings 21 for receiving bolts, rivets or the like that are inserted through corresponding holes 22 at the back shell 12. The bolts may be screwed into openings provided in the swellings 21. It is also possible to fix the front shell 11 on the back shell 12 by gluing or plastics welding.

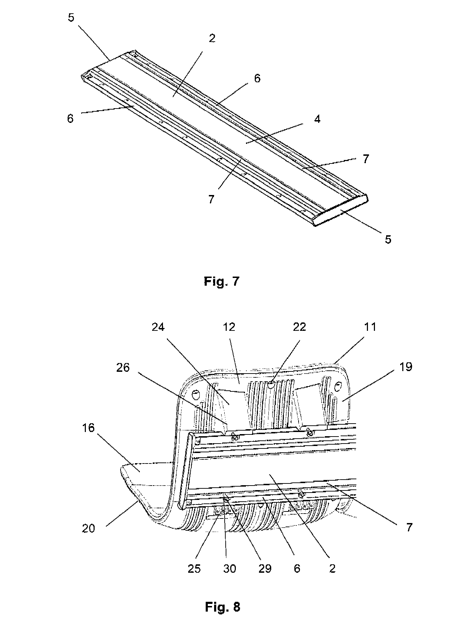

The seating support portion 19 forms at its side facing away from the front shell 12, i.e. at its bottom side 23 at least one connection interface 24 for mounting the seat 10 on the crossbeam 2. As shown in figs. 1 and 8, the crossbeam 2 passes underneath the seating support portion 19 in a direction parallel to the backrest support portion 20. The embodiment shows two connection interfaces 24 which are spaced apart from each other in lengthwise direction of the crossbeam 2 to provide high stability. However there may as well be more than two connection interfaces 24. It is also possible to unite the shown two interfaces 24 in a single interface.

Each connection interface 24 has at least two protrusions 25 and 26 spaced apart from each other across the crossbeam 2. One of the protrusions 25 is located closer to the backrest support portion 20 while the other is arranged further away from the backrest support portion 20. The two protrusions 25 and 26 are configured to a laterally embrace the crossbeam 2 as particularly shown in figs. 2 and 8. Both protrusions 25 and 26 abut opposing side walls of the crossbeam 2 to thereby position the seat 10 on the crossbeam 2 in transversal direction of said crossbeam 2.

Further, each connection interface 24 comprises an elongate support surface 27 between the protrusions 25 and 26 for resting on the crossbeam 2. The elongate support surface 27 is substantially planar and extends downwardly beyond the bottom side 23 of the back shell 12. As shown in fig. 2, the connection interface 24 may form an extension protruding downwardly from the surrounding area of the bottom side 23 so that the remaining part of the back shell 12 can be located above the crossbeam 2 without contacting same except for the connection interfaces 24.

At least one reinforcement member 28 is sandwiched between the front shell 11 and the back shell 12. Preferably, the reinforcement member 28 is made of metal or any other material having a higher strength than the upper and back shell 11, 12. One or more fasteners 29 for fixing the back shell 12 and thus also the seat 10 on the crossbeam 2 are anchored at each reinforcement member 28. The fasteners 29 extend through the back shell 12 towards the crossbeam 2. The fasters 29 can be bolts that are held with a head portion by the reinforcement member 28 and extend through the crossbeam 2 while nuts 30 are a screwed to the free ends of the fasteners 29 to thereby secure a seat 10 against the crossbeam 2.

The reinforcement members 28 can be formed from sheet metal and be arranged in depressions 30 formed in the seating support portion 19. The afore-described elongate support surface 27 is defined at the rear side of such a depression 30. The front shell 11 may cover the reinforcement members 28 and the fasteners 29 so that they are not visible from or through the top side 17 of the front shell 11.

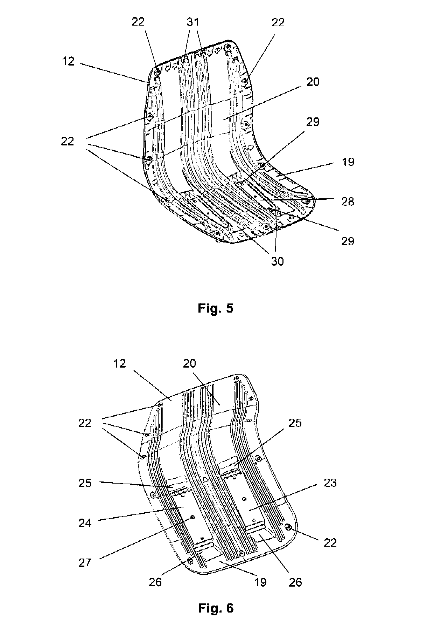

Further, the back shell 12 may be formed at its side facing towards the front shell 11 with ribs 31 extending from the backrest support portion 20 to the seating support portion 19 and protruding towards the front shell 11. Preferably, the depressions 30 are formed between these ribs 31. These ribs 31 enhance stability of the seat 10 and the front shell 11 may rest on these ribs 31. Their number and arrangement may vary from that shown in figs. 5 and 6.

The ribs 31 may be solid. Alternatively, some or all of the ribs 31 may be formed as hollow channels. This can be achieved by gas-assisted injection molding of the back shell 12 wherein an inert gas such nitrogen is introduced at pressure into the polymer melt stream at the end of the polymer injection phase. The front shell 11 may be formed by the same process but preferably standard injection molding can be used for the front shell 11.

Fig. 7 shows the bottom side 4 of the cross beam 2. The crossbeam 2 has along its length a constant cross-sectional area and may e.g. be made from an extruded profile. Caps 5 may be arranged at axial end portions and made be made from a different material than the cross beam 2 itself. Suitable materials for a crossbeam 2 are metals and in particular aluminium alloys.

The crossbeam 2 is provided at its side facing away from the seat 10 with first grooves 6 extending in lengthwise direction of the crossbeam 2 for receiving the fasteners 29. Preferably, the end portions of the fasteners 29 and corresponding securing elements such as nuts 30 are received in the first grooves 6 so that they are hardly visible to the passenger's eye during normal use of a seat 10.

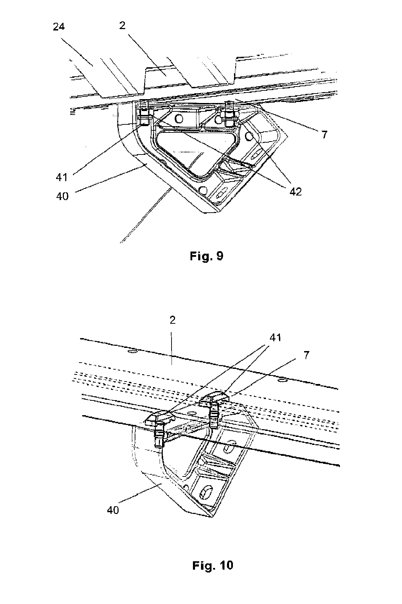

Further, the crossbeam 2 may be provided at its side facing away from the seat 10 with second grooves 7 extending in lengthwise direction of the crossbeam 2 for securing the crossbeam 2 to a support structure 40 as shown in figures 8 to 10. The second grooves 7 each have an undercut so as to enable insertion and fixation of T-shaped fasteners 41. The T-shaped fasteners 41 may be inserted from the bottom side 4 into the second grooves 7 and by rotating them by about 90° interlock with the undercut of the second groove 7. The T-shaped fasteners 41 may have threaded studs that extend through the support structure 40 and may be secured by securing elements such as nuts 42. This enhances assembly and disassembly of the crossbeam 2 on the support structure 40. The latter may vary in shape depending on the individual surroundings. In addition assembly and disassembly of the seats 10 on the crossbeam 2 and assembly and disassembly of the crossbeam 2 on the support structure 40 may be carried out independently and in any desired order.

The second grooves 7 may as well be used for fixing an armrest and/or a hand rail 3 to the crossbeam 2 at its side 4 facing away from the seat 10.

The afore-described seat 10 and seating system exhibit a high stability of the seat 10 and connection between the seat 10 and crossbeam 2 so that they are well suited for implementation in public transport vehicles.

In addition, the system is highly flexible and can be adapted easily to varying vehicle interiors.

Further, its components are simple in structure and can be manufactured at low costs.

Moreover, the seating system is highly flexible in respect of its assembly and disassembly. Since the front shell is more likely to be affected by use and vandalism a damaged front shell, which is cheaper than the back shell, may be exchanged rapidly because of the screwed connection.

## Claims

**1.** Seat (10) comprising a front shell (11) and a back shell (12) in stacked arrangement, the front shell (11) having a seating portion (15) and a backrest (16) integrally moulded of synthetic resin, the back shell (12) having a seating support portion (19) and a backrest support portion (20) integrally moulded of synthetic resin, wherein the seating support portion (20) forms at its side facing away from the front shell (11) at least one connection interface (24) for mounting on a crossbeam (2) passing underneath the seating support portion (20) in a direction parallel to the backrest support portion (19), each connection interface (24) having at least two protrusions (25, 26) spaced apart from each other across the crossbeam (2) and configured to laterally embrace the crossbeam (2) to thereby position the seat (10) on the crossbeam (2) in transversal direction of said crossbeam (2).

**2.** Seat according to claim 1, **characterised in that** at least one reinforcement member (28) is sandwiched between the front shell (11) and the back shell (12), and one or more a fasteners (29) for fixing the seat (10) on the crossbeam (2) are anchored at each reinforcement member (28) and extend through the back shell (12) towards the crossbeam (2).

**3.** Seat according to claim 1 or 2, **characterised in that** the front shell (11) covers the reinforcement members (28) and the fasteners (29).

**4.** Seat according to one of claims 1 to 3, **characterised in that** the back shell (12) is formed at its side facing towards the front shell (11) with ribs (31) extending from the backrest support portion (20) to the seating support portion (19) and protruding towards the front shell (11).

**5.** Seat according to one of claims 1 to 4, **characterised in that** each connection interface (24) comprises an elongate support surface (27) between the protrusions (25, 26) for resting on the crossbeam (2).

**6.** Seat according to claim 5, **characterised in that** the elongate support surface (27) is defined at the rear side of a depression (30) formed in the seating support portion (19), the depression (30) receiving one reinforcement member (28) and the rear side of the depression (30) extending downwards and beyond a bottom side (23) of the back shell (12).

**7.** Seat according to one of claims 1 to 6, **characterised in that** the back shell (12) is fixed on the front shell (11) from the bottom side (18) of the front shell (11) while the front shell (11) exposes a smooth and interruption free top side (17) at least in any connection area between the back shell (12) and the front shell (11).

**8.** Seat according to one of claims 1 to 7, **characterised in that** the parting line (13) between the front shell (11) and the back shell (12) extends along an outer rim (14) of the front shell (11) around the front shell (11).

**10.** Seating system comprising
the crossbeam (2), and
one or more seats (10) according to any of claims 1 to 8, wherein each seat (10) laterally embraces the crossbeam (2) and is fixed thereto by fasteners (29).

**11.** Seating system according to claim 10, **characterised in that** at the crossbeam (2) has a long its length a constant cross-sectional area.

**12.** Seating system according to claim 10 or 11, **characterised in that** the crossbeam (2) is provided at its side facing away from the seat (10) with first grooves (6) extending in lengthwise direction of the crossbeam (2) for receiving the fasteners (29).

**13.** Seating system according to one of claims 10 to 12, **characterised in that** crossbeam (2) is provided at its side facing away from the seat (10) with second grooves (7) extending in lengthwise direction of the crossbeam (2) for securing the crossbeam (2) to a support structure (40), said second grooves (7) each having an undercut.
an armrest and/or a hand rail (3) are fixed to the crossbeam (2) at its side facing away from the seat (10).

**14.** Seating system according to claim 13, **characterised in that** the armrest and/or hand rail (3) are fixed to the crossbeam (2) via the second grooves (7).

**15.** Public transport vehicle comprising a seat (10) or seating system according to any of the preceding claims.
